# EUROPEAN PATENT APPLICATION

(11) **EP 2 592 466 A1**
(43) Date of publication of application: **15.05.2013**
(21) Application number: 12190553.3
(22) Date of filing: 30.10.2012
(51) Int. Cl.: G02F 1/1333

(54) **Display device and television apparatus**

(30) Priority: 08.11.2011 JP 2011244365
(71) Applicant: Funai Electric Co., Ltd., Daito-shi, Osaka 574-0013 (JP)
(72) Inventor: TANAKA, Kazuya, Daito-shi, Osaka 574-0013 (JP)
(74) Representative: Grünecker, Kinkeldey, Stockmair & Schwanhäusser

(57) **Abstract**

A display device includes a display panel, a rear metal member and a resin frame. The rear metal member is disposed on a rear side of the display device relative to the display panel in a first direction. The rear metal member is arranged along a side portion of the display panel. The resin frame covers a side surface of the rear metal member such that the resin frame overlaps the side surface in the first direction. The resin frame has a first engaging section in a portion of the resin frame. The rear metal member has a second engaging section in a portion of the rear metal member that corresponds to the first engaging section. The second engaging section is engaged with the first engaging section in the first direction such that the second engaging section restricts movement of the first engaging section in a second direction.

## Description

### CROSS-REFERENCE TO RELATED APPLICATIONS

This application claims priority to Japanese Patent Application No. 2011-244365 filed on November 8, 2011. The entire disclosure of Japanese Patent Application No. 2011-244365 is hereby incorporated herein by reference.

### BACKGROUND

### Field of the Invention

The present invention relates to a display device and a television apparatus. More specifically, the present invention relates to a display device and a television apparatus provided with a resin frame.

### Background Information

Conventional display devices provided with a resin frame are known (see Japanese Laid-Open Patent Application Publication No. 2003-162232 (Patent Citation 1), for example).

Specifically, with Patent Citation 1, a liquid crystal display device (e.g., a display device) includes a frame case with a substantially box shape made of a metal plate, and a mold frame (e.g., a resin frame). The mold frame is arranged to overlap the frame case in an anteroposterior direction (i.e., a direction perpendicular to a bottom surface of the frame case). In this liquid crystal display device, an end portion of the frame case has a substantially U-shaped cross-sectional shape by folding the end portion of the frame case, while an end portion of the mold frame has a substantially U-shaped cross-sectional shape such that the substantially U-shaped end portion of the frame case is fit into the end portion of the mold frame. A fixing hole is provided in the substantially U-shaped end portion (e.g., an outer side surface) of the frame case, and the fixing hole is configured to penetrate in a horizontal direction (i.e., a direction along the bottom surface of the frame case) perpendicular to the anteroposterior direction. A fixing projection is provided in the substantially U-shaped end portion (e.g., an inner side surface) of the mold frame, and the fixing projection is configured to be projected toward the frame case in the horizontal direction perpendicular to the anteroposterior direction. By engaging the fixing projection of the mold frame with the fixing hole of the frame case, movement of the mold frame in the anteroposterior direction (i.e., the direction perpendicular to the bottom surface of the frame case) is restricted.

### SUMMARY

In the display device described in Patent Document 1, however, the fixing hole of the frame case and the fixing projection of the mold frame (e.g., the resin frame) are arranged in the horizontal direction perpendicular to the anteroposterior direction. It has been discovered that, while movement of the mold frame in the anteroposterior direction is restricted, there is a problem that the end portion (e.g., the outer side surface) of the frame case is deformed (or expanded outwardly) in the horizontal direction perpendicular to the anteroposterior direction due to external force acting on the mold frame.

One object of the present disclosure is to provide a display device and a television apparatus in which a resin frame can be prevented from being deformed.

In view of the state of the know technology, a display device includes a display panel, a rear metal member and a resin frame. The rear metal member is disposed on a rear side of the display device relative to the display panel in a first direction of the display device. The rear metal member is arranged along a side portion of the display panel. The resin frame covers a side surface of the rear metal member such that the resin frame overlaps the side surface of the rear metal member in the first direction. The resin frame has a first engaging section in a portion of the resin frame that faces the rear metal member in the first direction. The rear metal member has a second engaging section in a portion of the rear metal member that corresponds to the first engaging section of the resin frame. The second engaging section is engaged with the first engaging section in the first direction such that the second engaging section restricts movement of the first engaging section in a second direction of the display device. The second direction is perpendicular to the first direction.

Other objects, features, aspects and advantages of the present disclosure will become apparent to those skilled in the art from the following detailed description, which, taken in conjunction with the annexed drawings, discloses a preferred embodiment of a display device and a television apparatus.

### BRIEF DESCRIPTION OF THE DRAWINGS

Referring now to the attached drawings which form a part of this original disclosure:

FIG. 1 is a front perspective view of a liquid crystal television apparatus in accordance with according to one embodiment;

FIG. 2 is a rear perspective view of the liquid crystal television apparatus illustrated in FIG. 1;

FIG. 3 is a rear elevational view of the liquid crystal television apparatus illustrated in FIG. 1;

FIG. 4 is an exploded perspective view of the liquid crystal television apparatus illustrated in FIG. 1;

FIG. 5 is a rear elevational view of a heat sink, a reflection sheet, and a reflection sheet holder of the liquid crystal television apparatus illustrated in FIG. 1;

FIG. 6 is a front elevational view of the heat sink and the reflection sheet holder of the liquid crystal television apparatus illustrated in FIG. 1;

FIG. 7 is an exploded perspective view of bezels of the liquid crystal television apparatus illustrated in FIG. 1;

FIG. 8 is a partial cross sectional view of the liquid crystal television apparatus taken along VIII-VIII line in FIG. 3;

FIG. 9 is a partial cross sectional view of the liquid crystal television apparatus taken along IX-IX line in FIG. 3;

FIG. 10 is a partial rear elevational view of a resin frame of the liquid crystal television apparatus illustrated in FIG. 1;

FIG. 11 is a rear elevational view of the heat sink of the liquid crystal television apparatus illustrated in FIG. 1;

FIG. 12 is a partial perspective view of a projected section of the resin frame of the liquid crystal television apparatus illustrated in FIG. 1;

FIG. 13 is a partial rear elevational view of the projected section of the resin frame of the liquid crystal television apparatus illustrated in FIG. 1;

FIG. 14 is a partial cross sectional view of the projected section taken along XIV-XIV line of FIG. 13;

FIG. 15 is a partial cross sectional view of the projected section taken along XV-XV line of FIG. 13;

FIG. 16 is a partial perspective view of a hole section of the heat sink of the liquid crystal television apparatus illustrated in FIG. 1:

FIG. 17 is a partial rear elevational view of the projected section and the hole section, illustrating a state in which the projected section of the resin frame is inserted into the hole section of the heat sink;

FIG. 18 is a block diagram of the liquid crystal television apparatus illustrated in FIG. 1;

FIG. 19 is a cross sectional view explaining control of deformation of the resin frame of the liquid crystal television apparatus illustrated in FIG. 1;

FIG. 20 is a cross sectional view explaining correction of deformation of the resin frame of the liquid crystal television apparatus illustrated in FIG. 1;

FIG. 21 is a cross sectional view of a modified example of a heat sink in accordance with a modified embodiment; and

FIG. 22 is a cross sectional view of modified examples of a resin frame and a heat sink in accordance with another modified embodiment.

### DETAILED DESCRIPTION OF EMBODIMENTS

A preferred embodiment will now be explained with reference to the drawings. It will be apparent to those skilled in the art from this disclosure that the following descriptions of the embodiment are provided for illustration only and not for the purpose of limiting the invention as defined by the appended claims and their equivalents.

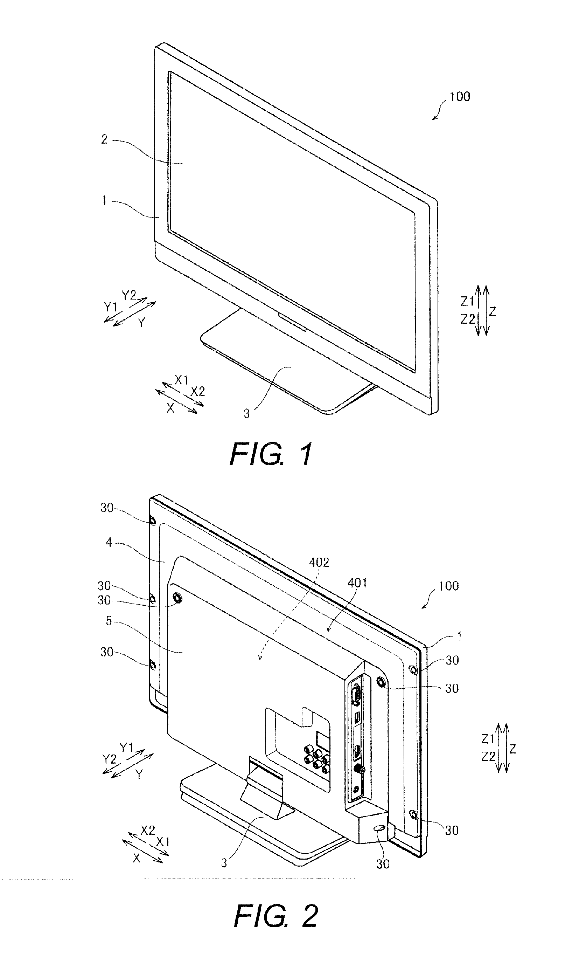

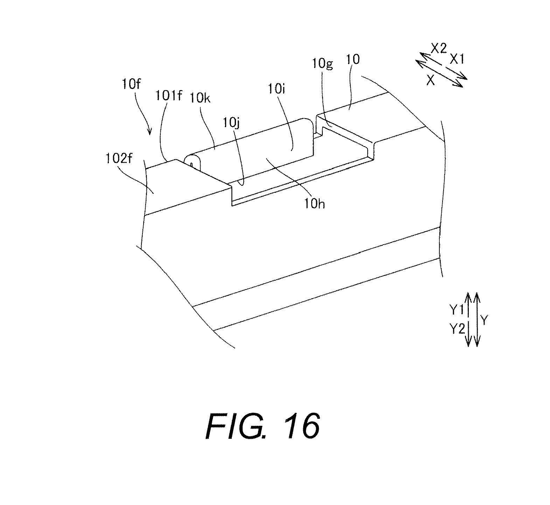

The configuration of a liquid crystal television apparatus 100 according to one embodiment will be described with reference to FIGS. 1 through 20. The liquid crystal television apparatus 100 is an example of a "display device" and a "television apparatus."

As shown in FIGS. 1 through 3, the liquid crystal television apparatus 100 includes a frame-shaped front chassis 1, a liquid crystal display panel 2 and a stand member 3. The front chassis 1 has a rectangular shape. The liquid crystal display panel 2 is housed in the front chassis 1, and has a display screen on an arrow Y1 side. The stand member 3 supports the liquid crystal television apparatus 100 as a whole. The front chassis 1 and the stand member 3 are both made of resin. The liquid crystal display panel 2 is an example of a "display panel." In the following explanations, the display screen side of the liquid crystal display panel 2 is a front side of the liquid crystal television apparatus 100 (e.g., a front surface side or the arrow Y1 side), and the opposite side of the display screen side of the liquid crystal display panel 2 is a back side (e.g., a rear side) of the liquid crystal television apparatus 100 (e.g., a back surface side or an arrow Y2 side).

Furthermore, an arrow X indicates a widthwise or longitudinal direction (e.g., a second direction) of the liquid crystal television apparatus 100, an arrow Y indicates a front to back or anteroposterior direction (e.g., a first direction) of the liquid crystal television apparatus 100, and an arrow Z indicates a height or short-side direction of the liquid crystal television apparatus 100. Moreover, arrows X1 and X2 indicate left and right sides of the liquid crystal television apparatus 100 along the widthwise direction X from the perspective of viewing the liquid crystal display panel 2 from the arrow Y1 side (or front side), respectively, while arrows Z1 and Z2 indicate upper and lower sides of the liquid crystal television apparatus 100 along the height direction Z, respectively.

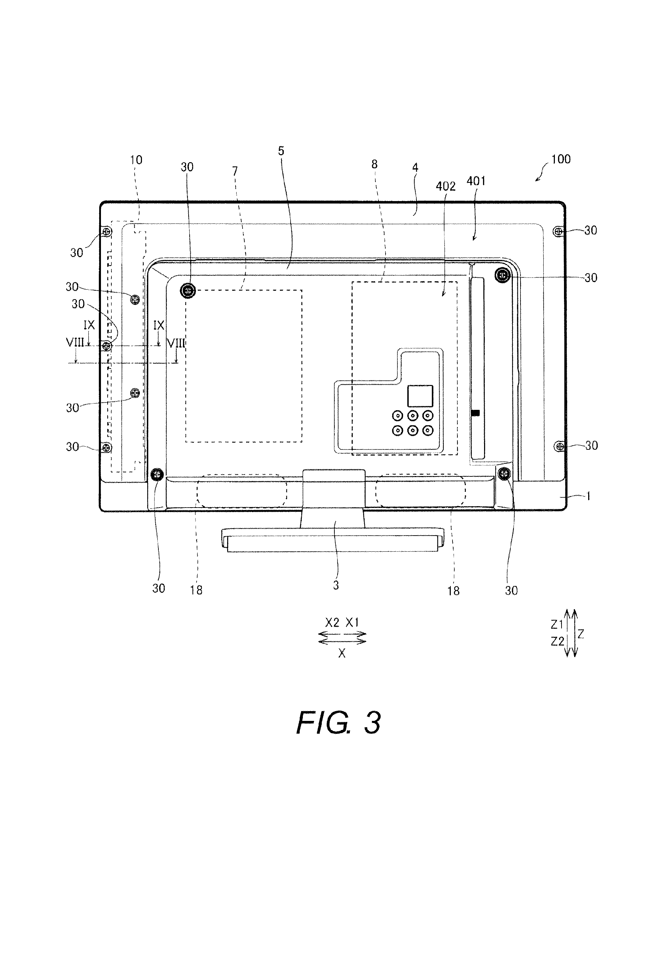

As shown in FIG. 2 and FIG. 3, the liquid crystal television apparatus 100 further includes a rear frame 4. The rear frame 4 is made of sheet metal, such as SECC (steel electrolytic cold commercial or electrolytic zinc-coated steel sheet). The rear frame 4 is disposed on a rear surface side (e.g., a rear side) of the front chassis 1 (i.e., on the arrow Y2 side). As shown in FIG. 3, the rear frame 4 has a rectangular shape viewed from the back.

The liquid crystal television apparatus 100 further includes a cover member 5. The cover member 5 is made of resin. The cover member 5 is attached to a back surface of the metal rear frame 4 on a rear surface side of the metal rear frame 4. The cover member 5 has a rectangular shape viewed from the back, and is formed to be smaller than the front chassis 1 and the rear frame 4.

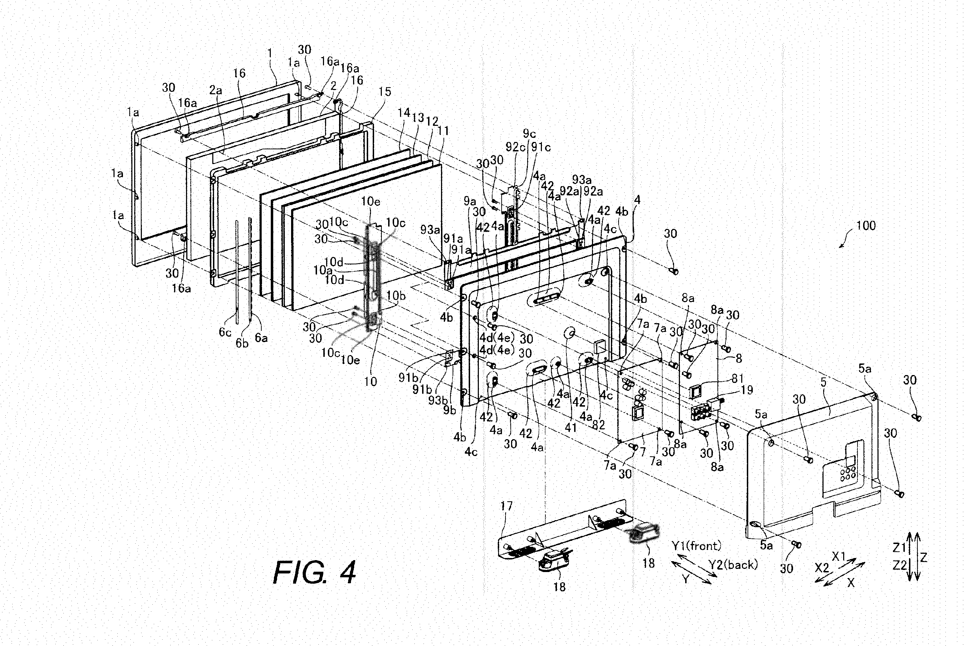

The cover member 5 covers the rear surface (i.e., the back surface) of the rear frame 4 such that the vicinity of the outer peripheral portion of the rear surface of the rear frame 4 is exposed in an inverted U shape viewed from the back. A rear chassis is constructed of an area 401 of the rear surface of the rear frame 4 exposed outside, and the cover member 5. The area 401 of the rear frame 4 exposed outside serves as a heat releasing section that releases heat generated from an LED light source 6a and a heat generating element 81 (see FIG. 4) of a circuit board 8 outside. The LED light source 6a is an example of the "light source."

As shown in FIG. 3 and FIG. 4, the liquid crystal television apparatus 100 further has a circuit board 7 and the circuit board 8. The circuit board 7 has the function of supplying power to the apparatus as a whole, while the circuit board 8 has the function of signal processing. The circuit boards 7 and 8 are attached to an area 402 in an arrangement spaced apart from each other at a predetermined distance in the X direction on the rear surface side of the rear frame 4 to which the cover member 5 is attached. The heat generating element 81 such as an IC that generates heat in a normal use condition is attached to the circuit board 8.

The rear frame 4 has a thermal pad attachment section 41 that is projected toward the inner surface of the cover member 5. The thermal pad attachment section 41 is formed in an area of the rear surface (i.e., a surface on the arrow Y2 side) of the rear frame 4 corresponding to the heat generating element 81 of the circuit board 8. A thermal pad 82 is provided between the thermal pad attachment section 41 of the rear frame 4 and the heat generating element 81 of the circuit board 8, so that heat generated from the heat generating element 81 is released toward the rear frame 4. The thermal pad 82 is made of a mixed material of silicone polymer and ceramics.

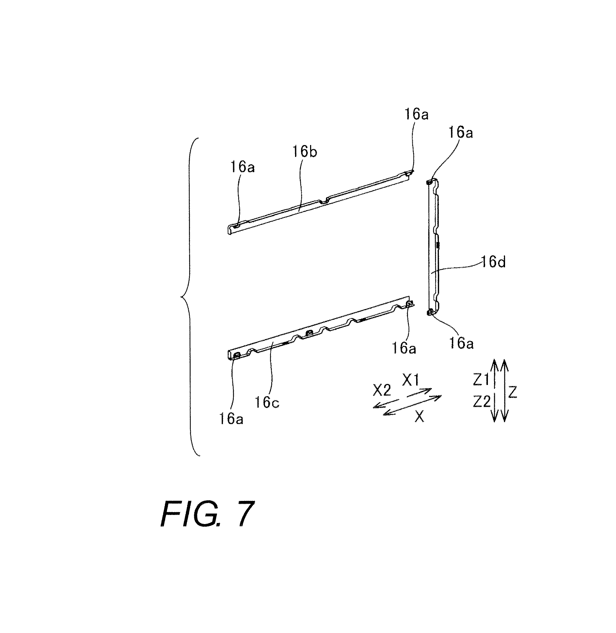

As shown in FIG. 4, FIG. 5 and FIG. 6, the liquid crystal television apparatus 100 further has reflection sheet holders 9a, 9b and 9c, and a heat sink 10. The reflection sheet holders 9a, 9b and 9c are made of sheet metal (SECC). The heat sink 10 is made of sheet metal (SECC). The heat sink 10 is disposed in front of the rear frame 4 (i.e., on the arrow Y1 side relative to the rear frame 4). The heat sink 10 is also disposed on the arrow Y2 side (e.g., the rear side) relative to the liquid crystal display panel 2 in the Y direction. The liquid crystal television apparatus 100 further has a reflection sheet 11, a light guide plate 12, a light diffusing sheet 13, a lens sheet 14, a frame-shaped resin frame 15 (e.g., resin frame) and three bezels 16 (e.g., bezels 16b, 16c and 16d, see FIG. 7). The reflection sheet 11, the light guide plate 12, the light diffusing sheet 13, the lens sheet 14, the frame-shaped resin frame 15, the liquid crystal display panel 2 to which a board 2a for driving a liquid crystal display panel that drives the liquid crystal display panel 2 is attached, and the bezels 16 are disposed in front of the reflection sheet holders 9a, 9b and 9c and the heat sink 10 (i.e., on the arrow Y1 side relative to the reflection sheet holders 9a, 9b and 9c and the heat sink 10). More specifically, the bezels 16 are disposed on the front side relative to the frame-shaped resin frame 15. The heat sink 10 is an example of a "rear metal member."

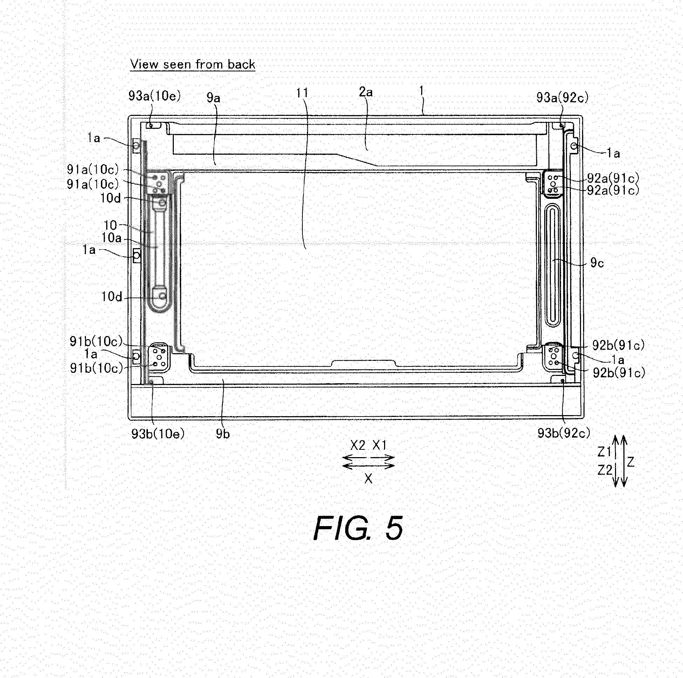

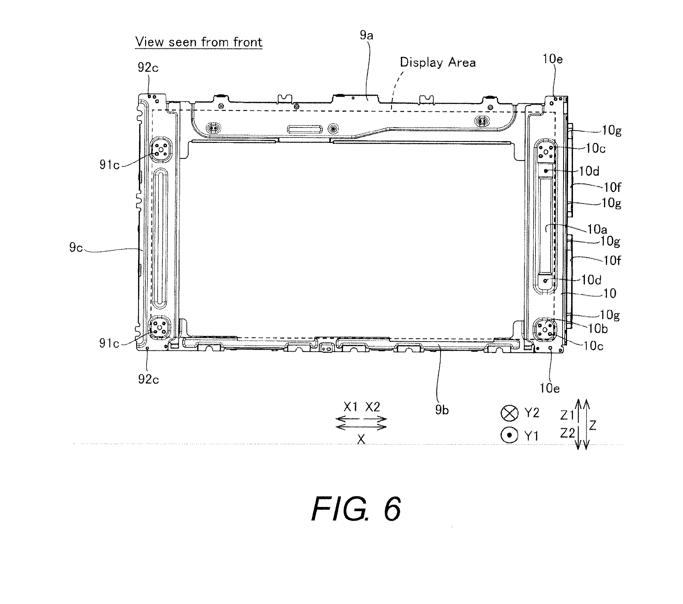

As shown in FIG. 5 and FIG. 6, the reflection sheet holders 9a, 9b and 9c and the heat sink 10 are provided along four sides (i.e., sides in the arrow Z1 direction, the arrow Z2 direction, the arrow X1 direction, and the arrow X2 direction) of the display area of the liquid crystal display panel 2, respectively. In particular, the heat sink 10 is arranged along the side (e.g., a side portion) of the liquid crystal display panel 2 in X2 direction.

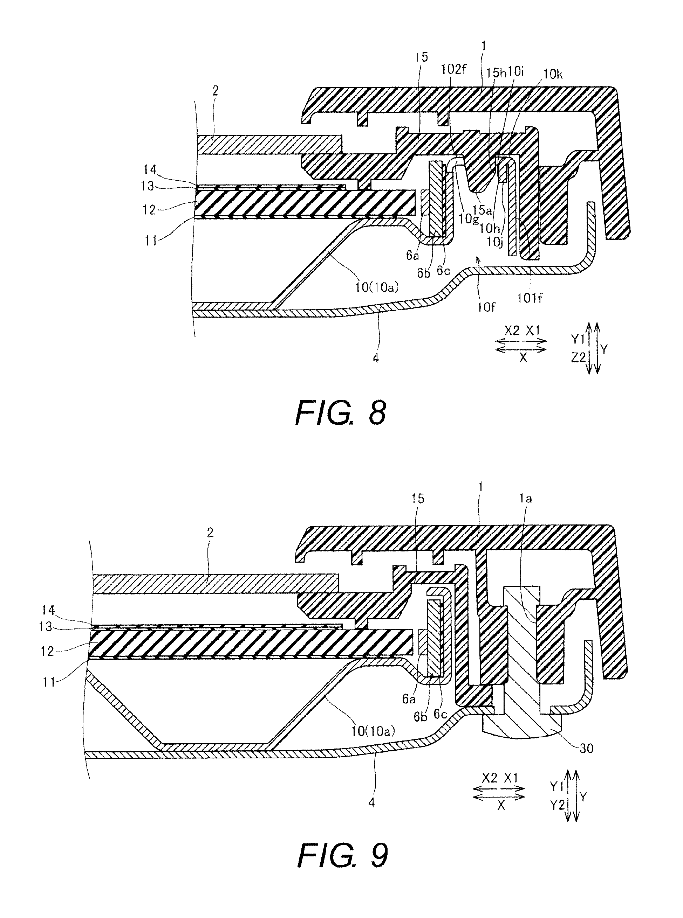

As shown in FIG. 6, the heat sink 10 has first and second drawn portions 10a and 10b. The first and second drawn portions 10a and 10b are formed by drawing processing to be projected toward the rear frame 4 (i.e., on the arrow Y2 side). The first drawn portion 10a is provided to bring the heat sink 10 and the rear frame 4 into surface contact (see FIG. 8 and FIG. 9) with each other. A portion (i.e., a portion on the arrow Z1 side) of the first drawn portion 10a where screw insertion holes 10c described below are formed is provided to bring the heat sink 10 and the reflection sheet holder 9a into surface contact with each other. The second drawn portion 10b is provided to bring the heat sink 10 and the relection sheet holder 9b into surface contact with each other. The screw insertion holes 10c for attaching the reflection sheet holder 9a are formed in the first drawn portion 10a. Screw insertion holes 10d for attaching the rear frame 4 are also formed in the first drawn portion 10a. Screw insertion holes 10c for attaching the reflection sheet holder 9b are formed in the second drawn portion 10b. Screw insertion holes 10e for attaching the bezels 16 are formed in the upper end portion and the lower end portion of the heat sink 10.

As shown in FIG. 5, heat sink attachment threaded holes 91a and heat sink attachment threaded holes 91b for attaching the heat sink 10 are formed at the left ends of the reflection sheet holder 9a and the reflection sheet holder 9b, respectively. Reflection sheet holder attachment threaded holes 92a and reflection sheet holder attachment threaded holes 92b for attaching the reflection sheet holder 9c are formed at the right ends of the reflection sheet holder 9a and the reflection sheet holder 9b, respectively. The heat sink 10 and the reflection sheet holders 9a and 9b are fixed by fastening screws 30 (see FIG. 4) into the heat sink attachment threaded holes 91a of the reflection sheet holder 9a and the heat sink attachment threaded holes 91b of the reflection sheet holder 9b through the screw insertion holes 10c of the heat sink 10. The reflection sheet holders 9a, 9b and 9c are fixed by fastening screws 30 into the reflection sheet holder attachment threaded holes 92a of the reflection sheet holder 9a and the reflection sheet holder attachment threaded holes 92b of the reflection sheet holder 9b through the screw insertion holes 91c of the reflection sheet holder 9c.

The bezels 16 (i.e., the bezel 16b provided on the arrow Z1 side and the bezel 16c provided on the arrow Z2 side among the three bezels 16b, 16c and 16d (see FIG. 7)), the heat sink 10, and the reflection sheet holders 9a and 9b are fixed by fastening screws 30 into screw insertion holes 93a and 93b formed at the left ends of the reflection sheet holders 9a and 9b, respectively, through screw insertion holes 16a of the bezels 16 and the screw insertion holes 10e of the heat sink 10. The bezels 16 (i.e., the three bezels 16b, 16c and 16d), and the reflection sheet holders 9a, 9b and 9c are fixed by fastening a screw 30 into a screw insertion hole 93a formed at the right end of the reflection sheet holder 9a through screw insertion holes 16a of the bezels 16 and a screw insertion hole 92c in the upper end portion of the reflection sheet holder 9c, and by fastening a screw 30 into a screw insertion hole 93b formed at the right end of the reflection sheet holder 9b through screw insertion holes 16a of the bezels 16 and a screw insertion hole 92c in the lower end portion of the reflection sheet holder 9c.

As shown in FIG. 8 and FIG. 9, the frame-shaped resin frame 15 is provided in front of the heat sink 10 (i.e., in the arrow Y1 direction relative to the heat sink 10) to cover an end portion 10f (e.g., side surfaces 101f, and a surface 102f connected to the side surfaces 101f) described below having a substantially U shape, and overlap the end portion 10f frontward (i.e., in the arrow Y1 direction). In other words, the frame-shaped resin frame 15 covers the side surfaces 101f of the heat sink 10 such that the frame-shaped resin frame overlaps the side surface 101f of the heat sink 10 in the arrow Y1 direction.

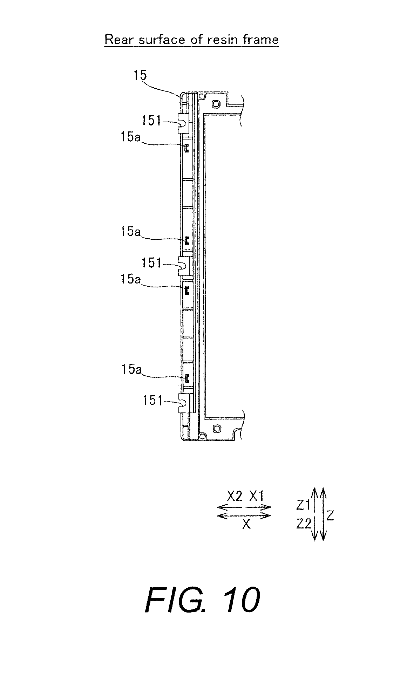

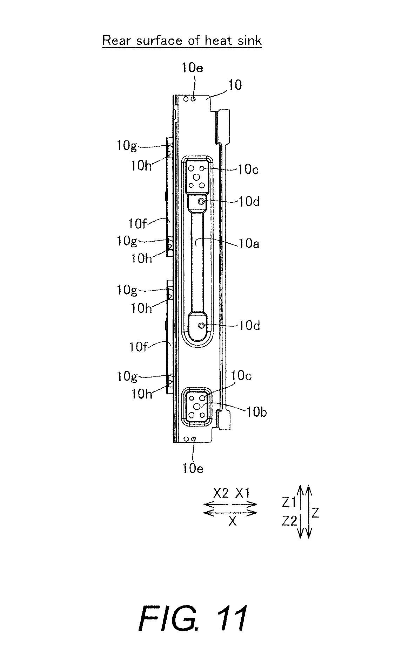

Here, in the present embodiment, as shown in FIG. 8 and FIG. 10, the frame-shaped resin frame 15 has a plurality of (four in this embodiment) projected sections 15a. The projected sections 15a are formed in portions of the frame-shaped resin frame 15 that face the heat sink 10 in the anteroposterior direction (i.e., the Y direction). The projected sections 15a are an example of a "first engaging section." In other words, the first engaging section includes the projected sections 15a. The projected sections 15a are provided in a side of the resin frame 15 on the arrow X2 side. The projected sections 15a are arranged in the vicinity of hole-shaped joint sections 151 through which screws 30 described below penetrate when the rear frame 4 is fixed to the front chassis 1. On the other hand, the heat sink 10 has a plurality of (four in this embodiment) hole sections 10g. The hole sections 10g are formed in portions of the heat sink 10 that correspond to the projected sections 15a of the resin frame 15, respectively. The hole sections 10g are engaged or fitted with the projected sections 15a in the anteroposterior direction (i.e. the Y direction) so as to restrict movement of the projected sections 15a in a direction (i.e., the X direction or second direction) perpendicular to the anteroposterior direction (e.g., the first direction). The hole sections 10g are an example of a "second engaging section." In other words, the second engaging section includes the hole sections 10g. The hole sections 10g are provided in the heat sink 10, as shown in FIG. 11. The projected sections 15a of the resin frame 15 and the hole sections 10g of the heat sink 10 are arranged in a side (i.e., a side on the arrow X2 side) among four sides of the display area (see the dashed line of FIG. 6) where the bezels 16 are not provided.

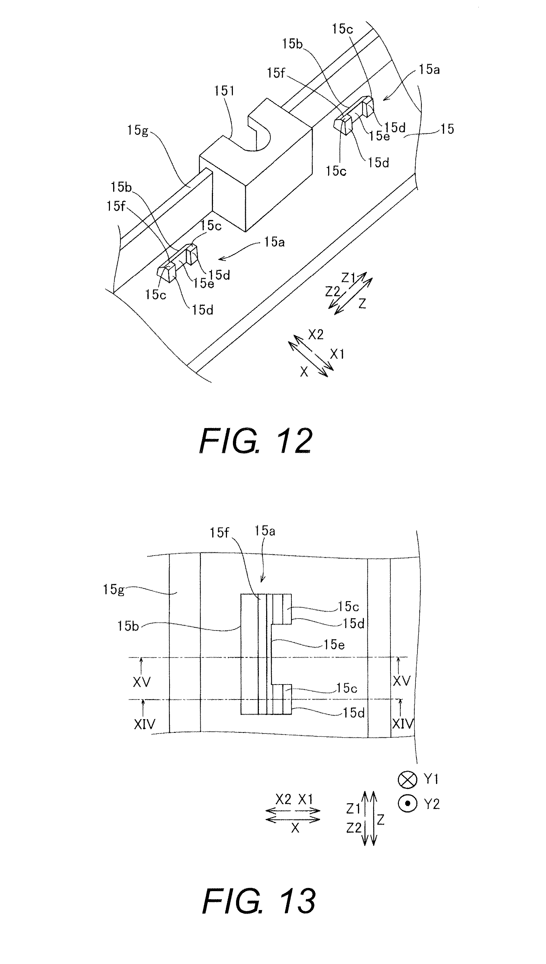

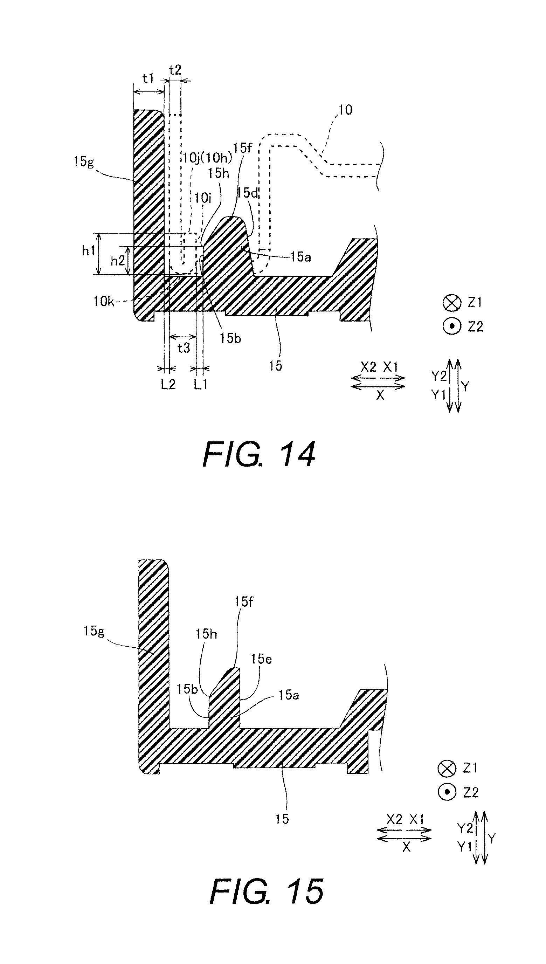

Here, in the present embodiment, as shown in FIGS. 12 through 15, each of the projected sections 15a of the resin frame 15 includes an abutting portion 15b, and a pair of reinforcing portions 15c. The abutting portion 15b is provided in the projected section 15a of the frame-shaped resin frame 15 substantially along the YZ plane. The abutting portion 15b abuts against respective one of the hole sections 10g of the heat sink 10 (i.e., folded portion 10h described below). As shown in FIG. 12 and FIG. 13, the reinforcing portions 15c reinforce the projected section 15a, and are provided in the projected section 15a of the frame-shaped resin frame 15. The reinforcing portions 15c extend toward an opposite side (i.e., the arrow X1 side) with respect to the abutting portion 15b at both ends of the Z direction. In other words, the reinforcing portions 15c are disposed on the opposite side of the abutting portion 15b of the projected section 15a. The reinforcing portions 15c are formed in a rib shape such that they extend in a direction (i.e., X direction) perpendicular to a direction in which the abutting portion 15b extends. In other words, the reinforcing portions 15c include ribs, respectively. As shown in FIG. 14, surfaces 15d of the reinforcing portions 15c on the arrow X1 side are formed to be inclined with respect to the YZ plane. Therefore, portions of the projected section 15a where the reinforcing portions 15c are provided are configured such that the width of the projected section 15a in the X direction is gradually increased toward the arrow Y1 side. As shown in FIG. 15, a surface 15e of the projected section 15a on the arrow X1 side where the reinforcing portions 15c are not provided is formed along the YZ plane. A distal end portion 15f (e.g., a rear distal end portion) of the projected section 15a of the resin frame 15 on the rear side (i.e., the arrow Y2 side) is chamfered. As shown in FIG. 14, therefore, the distal end portion 15f of the projected section 15a of the resin frame 15 on the rear side (i.e., the arrow Y2 side) has a substantially round shape.

As shown in FIG. 8, FIG. 24 and FIG. 16, the end portions 10f of the heat sink 10 on the arrow X2 side have a substantially U-shaped cross-section by press working. The end portions 10f have an identical configuration relative to each other. The hole sections 10g are formed by cutting the surfaces 102f of the end portions 10f of the heat sink 10 on the arrow Y1 side, respectively. The hole sections 10g have an identical configuration relative to each other. Here, in the present embodiment, a folded portion 10h is provided in each of the hole sections 10g of the heat sink 10 made of sheet metal. The folded portion 10h is formed by folding the heat sink 10 made of sheet metal. The folded portions 10h partially define the hole sections 10g, respectively. The folded portion 10h includes a movement restricting surface 10i that restricts movement of the projected section 15a in the direction (i.e., the X direction or the second direction) perpendicular to the anteroposterior direction by causing the abutting portion 15b (see FIG. 14) of the projected section 15a of the resin frame 15 to abut against the movement restricting surface 10i. Also, the folded portion 10h is folded rearwardly (i.e., in the arrow Y2 direction). As shown in FIG. 14, the distance between the projected section 15a of the resin frame 15 and a side surface 15g (e.g., an inner side surface) of the resin frame 15 is made larger by the folded portion 10h. Therefore, the thickness of a portion, of a resin molding die (not shown in the drawing) used for forming the resin frame 15, that corresponds to a portion between the projected section 15a and the side surface 15g is made larger by the folded portion 10h. Consequently, the strength of the resin molding die can be increased, and the life span of the die can be extended.

As shown in FIG. 14, an end portion 10j (e.g., a rear end portion) on the rear side (i.e., the arrow Y2 side) of the folded portion 10h of the heat sink 10 is arranged or positioned rearward (i.e., on the arrow Y2 side) with respect to an end portion 15h (e.g., a rear end portion) on the rear side (i.e., the arrow Y2 side) of the abutting portion 15b of the projected section 15a abutting against the movement restricting surface 10i in a state where the frame-shaped resin frame 15 is arranged in front of the heat sink 10 (i.e., in the arrow Y1 direction). Specifically, a height h1 in the Y direction of the folded portion 10h is larger than a height h2 in the Y direction of the abutting portion 15b of the projected section 15a (i.e., h1>h2). Also, a bent portion 10k of the folded portion 10h on the arrow Y1 side is formed in a semicircular shape. Therefore, since the semicircular bent portion 10k of the folded portion 10h serves as an invitation (or a guide), the projected section 15a can be inserted into the hole section 10g smoothly when the projected section 15a is inserted into the hole section 10g. Furthermore, with the semicircular outer surface of the bent portion 10k of the folded portion 10h, the projected section 15a can be prevented from being scraped due to collision of the projected section 15a with the folded portion 10h. As a result, foreign substances (e.g., fragments of the projected section 15a) can be prevented from being generated by scraping the projected section 15a.

As shown in FIG. 14, the folded portion 10h of the heat sink 10 and the abutting portion 15b of the projected section 15a of the resin frame 15 are arranged to be spaced apart from each other at a distance L1 of around 0.2 mm or more and around 0.3 mm or less in a state where the frame-shaped resin frame 15 is arranged in front of the heat sink 10 (i.e., in the arrow Y1 direction). The folded portion 10h of the heat sink 10 and the side surface 15g of the resin frame 15 are arranged to be spaced apart from each other at a distance L2 of around 0.2 mm or more and around 0.3 mm or less. The side surface 15g of the resin frame 15 has a thickness t of around 1,0 mm. The heat sink 10 has a thickness t2 of around 0.6 mm. A portion of the heat sink 10 where the folded portion 10h is provided has a thickness t3 of around 1.2 mm or more and around 1.3 mm or less.

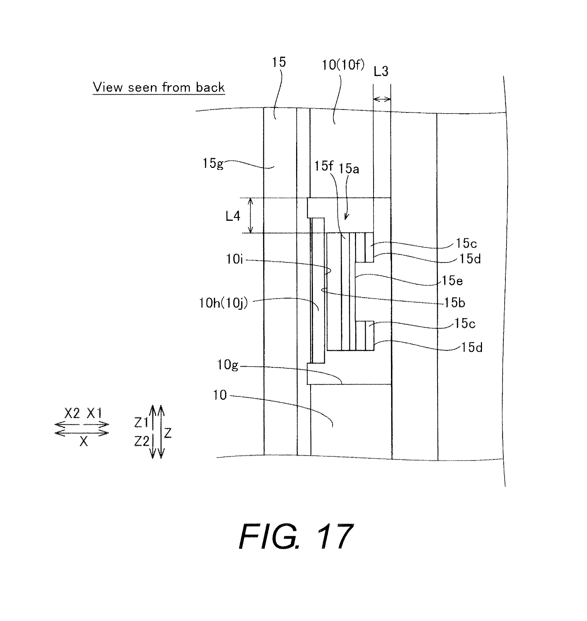

As shown in FIG. 17, in a plane view, the hole section 10g of the heat sink 10 and the reinforcing portions 15c of the projected section 15a of the resin frame 15 are arranged to be spaced apart from each other in the X direction at a distance L3 of around 3 mm or more and around 4 mm or less in a state where the frame-shaped resin frame 15 is arranged in front of the heat sink 10 (i.e., in the arrow Y1 direction). Also, in a plane view, the hole section 10g of the heat sink 10 and the projected section 15a of the resin frame 15 are arranged to be spaced apart from each other in the Z direction at a predetermined distance L4 (for example, around 2 mm or more and around 3 mm or less) that does not hinder insertion of the projected section 15a into the hole section 10g. Specifically, the projected section 15a is disposed at a center of the hole section 10g in the Z direction.

As shown in FIG. 5, the board 2a for driving a liquid crystal display panel that drives the liquid crystal display panel 2 is attached to the rear surface of the reflection sheet holder 9a provided in the vicinity of the side of the front chassis 1 on the arrow Z1 side.

As shown in FIG. 8, the LED light source 6a for back light includes a plurality of LEDs. The LED light source 6a is provided on a side of the light guide plate 12. The LED light source 6a generates heat in a normal use condition of the liquid crystal television apparatus 100. Also, the LED light source 6a is attached to a surface of an LED board 6b on the arrow X1 side. A surface of the LED board 6b on the arrow X2 side (i.e., the opposite surface of the surface to which the LED light source 6a is attached) is attached to a surface of the heat sink 10 on the arrow X1 side through a heat release tape or sheet 6c.

As shown in FIG. 4, a plurality of board attachment portions 42 to which the circuit board 7 and the circuit board 8 are attached, respectively, are formed in the rear surface (or bottom surface) of the rear frame 4. Each of the board attachment portions 42 is formed to be projected toward the cover member 5. A plurality of screw insertion holes 7a for inserting screws 30 are formed in the outer edge portion of the circuit board 7. The circuit board 7 is fixed to the rear frame 4 by fastening each of the screws 30 into each of a plurality of board attachment threaded holes 4a of the rear frame 4 through each of the screw insertion holes 7a of the circuit board 7.

A plurality of screw insertion holes 8a for inserting screws 30 are formed in the outer edge portion of the circuit board 8. The circuit board 8 is fixed to the rear frame 4 by fastening each of the screws 30 into each of board attachment threaded holes 4a of the rear frame 4 through each of the screw insertion holes 8a of the circuit board 8.

A plurality of screw insertion holes 4b for inserting screws 30 are formed in the rear surface of the rear frame 4 along the outer edge portion thereof. The rear frame 4 is fixed to the front chassis 1 by fastening each of the screws 30 into each of a plurality of rear chassis attachment threaded holes 1a of the front chassis 1 through each of the screw insertion holes 4b of the rear frame 4.

A plurality of cover member attachment threaded holes 4c for attaching the cover member 5 are formed in the rear surface of the rear frame 4. A plurality of screw insertion holes 5a are formed in the cover member 5. The cover member 5 is fixed to the rear frame 4 by fastening each of the screws 30 into each of the cover member attachment threaded holes 4c of the rear frame 4 through each of the screw insertion holes 5a of the cover member 5. Viewed from the back, the screw 30 fastened into the screw insertion hole 5a located at the upper left of the cover member 5 is fastened into the board attachment threaded hole 4a at the upper left of the rear frame 4 through the screw insertion hole 7a at the upper left of the circuit board 7.

Recessed portions 4d recessed toward the heat sink 10 are formed in portions of the rear frame 4 corresponding to the screw insertion holes 10d of the heat sink 10. Screw insertion holes 4e for attaching screws 30 are formed in the recessed portions 4d, respectively. The rear frame 4 and the heat sink 10 are fixed or pressed to each other in a surface contact state by fastening the screws 30 into the screw insertion holes 10d of the heat sink 10 through the screw insertion holes 4e of the rear frame 4.

The cover member 5 is attached by the screws 30 to the cover member attachment threaded holes 4c formed in the lower portion among the cover member attachment threaded holes 4c formed in the rear surface of the rear frame 4 such that a speaker attachment member 17 is sandwiched therebetween. Two speakers 18 are attached to the speaker attachment member 17. Also, the cover member 5 is attached to cover the circuit board 7, the circuit board 8, and the speaker attachment member 17 to which the two speakers 18 are attached, from the back.

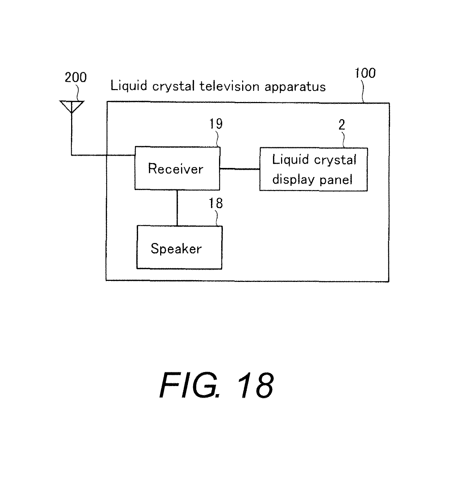

The circuit board 8 for signal processing attached to the rear frame 4 has a receiver or tuner 19 capable of receiving a television broadcast. As shown in FIG. 18, in the liquid crystal television apparatus 100, the receiver 19 is connected to the liquid crystal display panel 2 and the speakers 18, and is configured to output to the liquid crystal display panel 2 a video signal from the television broadcast signal (i.e., video signal and audio signal) received by an antenna 200 and output an audio signal to the speakers 18. In other words, the liquid crystal display panel 2 displays the television broadcast signal (e.g., television broadcast) received by the receiver 19.

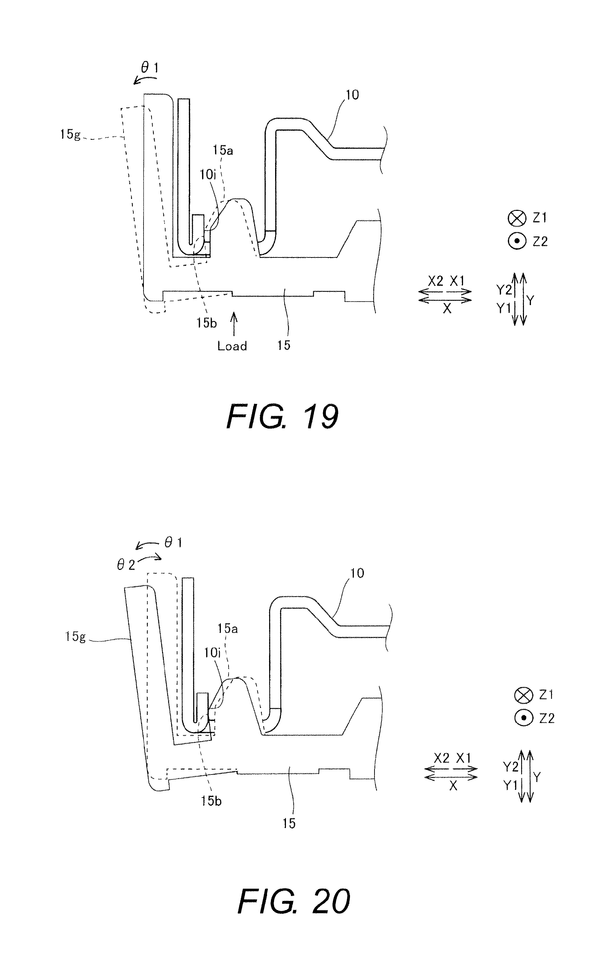

Next, an explanation will be made on a state where deformation of the resin frame 15 is controlled by the projected section 15a of the resin frame 15 and the hole section 10g of the heat sink 10 with reference to FIG. 19. As shown in FIG. 19, in a case where load is applied to the resin frame 15 toward the arrow Y2 side (for example, in a case where the screws 30 are inserted into the joint sections 151 and the screws 30 are fastened into the rear chassis attachment threaded holes 1a of the front chassis 1), the resin frame 15 will be deformed such that the side surface 15g of the resin frame 15 moves in the arrow X2 direction (i.e., expands in the θ1 direction) as shown in the dashed line. In this case, the projected section 15a (i.e., the abutting portion 15b) of the resin frame 15 abuts against the hole section 10g of the heat sink 10 (i.e., the movement restricting surface 10i of the folded portion 10h), which prevents the side surface 15g of the resin frame 15 from moving in the arrow X2 direction (i.e., expanding in the θ1 direction). Consequently, deformation of the resin frame 15 is controlled.

Next, an explanation will be made on a state where deformation of the resin frame 15 at the time of manufacturing is corrected by the projected section 15a of the resin frame 15 and the hole section 10g of the heat sink 10 with reference to FIG. 20. As shown in FIG. 20, even if the side surface 15g of the resin frame 15 has been deformed to expand in the arrow X2 direction (i.e., the θ1 direction) at the time of manufacturing, the projected section 15a of the resin frame 15 is inserted into the hole section 10g of the heat sink 10. Then, the projected section 15a (i.e., the abutting portion 15b) of the resin frame 15 abuts against the hole section 10g of the heat sink 10 (i.e., the movement restricting surface 10i of the folded portion 10h), and the side surface 15g of the resin frame 15 that has been deformed to expand in the arrow X2 direction (i.e., the θ1 direction) moves in the arrow X1 direction (i.e., the θ2 direction) as shown in the dashed line. Consequently, deformation of the resin frame 15 at the time of manufacturing is corrected.

In this embodiment, as described above, the projected section 15a is formed in the portion of the frame-shaped resin frame 15 facing the heat sink 10 in the anteroposterior direction. The hole section 10g is formed in the portion of the heat sink 10 that corresponds to the projected section 15a of the frame-shaped resin frame 15. The hole section 10g is engaged with the projected section 15a in the anteroposterior direction so as to restrict movement of the projected section 15a in a direction perpendicular to the anteroposterior direction. Accordingly, even if the frame-shaped resin frame 15 is about to be deformed to expand toward the direction perpendicular to the anteroposterior direction (i.e., outwardly) due to external force acting on the frame-shaped resin frame 15, movement of the projected section 15a of the resin frame 15 in the direction perpendicular to the anteroposterior direction is restricted by the hole section 10g of the heat sink 10. Thus, the resin frame 15 can be prevented from being deformed. Also, even if the frame-shaped resin frame 15 has been deformed to expand toward the direction perpendicular to the anteroposterior direction (i.e., outwardly) at the time of manufacturing, the resin frame 15 that has been deformed to expand toward the direction perpendicular to the anteroposterior direction (i.e., outwardly) is deformed inwardly by engaging the projected section 15a of the resin frame 15 with the hole section 10g of the heat sink 10. Thus, the deformation of the resin frame 15 at the time of manufacturing can be corrected.

In this embodiment, as described above, movement of the projected section 15a in the direction perpendicular to the anteroposterior direction is restricted by the hole section 10g. Therefore, since movement of the projected section 15a in the direction perpendicular to the anteroposterior direction is restricted by the hole section 10g, deformation of the resin frame 15 can easily be prevented by the projected section 15a and the hole section 10g.

In this embodiment, as described above, the hole section 10g of the heat sink 10 made of sheet metal includes the movement restricting surface 10i that restricts movement of the projected section 15a in the direction perpendicular to the anteroposterior direction by causing the projected section 15a of the resin frame 15 to abut against the movement restricting surface 10i. The folded portion 10h is provided in the movement restricting surface 10i of the hole section 10g. The folded portion 10h is formed by folding the heat sink 10 made of sheet metal. Consequently, even if the distance between the projected section 15a and the hole section 10g is larger than the thickness of the heat sink 10 made of sheet metal, the distance between the projected section 15a and the hole section 10g can be made smaller by the thickness of the folded portion 10h, and a movement amount of the projected section 15a of the resin frame 15 with respect to the hole section 10g of the heat sink 10 can be made smaller. As a result, deformation of the resin frame 15 can be controlled more compared to a case where the folded portion 10h is not provided.

In this embodiment, as described above, the folded portion 10h is formed by being folded rearward and configured such that the end portion 10j on the rear side of the folded portion 10h of the heat sink 10 is positioned rearward with respect to the end portion 15h on the rear side of the abutting portion 15b abutting against the movement restricting surface 10i in a state where the frame-shaped resin frame 15 is arranged in front of the heat sink 10. Consequently, since the abutting portion 15b of the projected section 15a is prevented from contacting the end portion 10j on the rear side of the folded portion 10h, the abutting portion 15b of the projected section 15a can be prevented from being damaged by contacting the end portion 10j (e.g., a corner portion) of the folded portion 10h.

In this embodiment, as described above, the projected section 15a of the frame-shaped resin frame 15 includes the reinforcing portions 15c for reinforcing the projected section 15a that is provided on an opposite side of the abutting portion 15b that abuts against the movement restricting surface 10i of the hole section 10g. Consequently, even when load is applied to the projected section 15a made of resin, the reinforcing portions 15c can prevent the projected portion 15a from being broken.

In this embodiment, as described above, the reinforcing portions 15c are formed in a rib shape such that it extends in a direction perpendicular to a direction in which the abutting portion 15b of the projected section 15a extends. Consequently, even when load is applied to the projected section 15a in the direction perpendicular to the direction in which the abutting portion 15b extends (for example, load is applied to the projected section 15a in the direction perpendicular to the direction in which the abutting portion 15b extends in a state where the side surface 15g of the resin frame 15 expands outwardly), the rib-shaped reinforcing portions 15c can easily prevent the projected portion 15a from being broken.

In this embodiment, as described above, the distal end portion 15f on the rear side of the projected section 15a of the frame-shaped resin frame 15 is chamfered. Consequently, when the projected section 15a of the resin frame 15 is inserted into the hole section 10g of the heat sink 10, the chamfered distal end portion 15f on the rear side of the projected section 15a serves as an invitation or a guide, and thus the projected section 15a of the resin frame 15 can be inserted into the hole section 10g of the heat sink 10 smoothly.

In this embodiment, as described above, the hole section 10g is formed in the heat sink 10 for releasing heat generated from the LED light source 6a. Consequently, by using the heat sink 10 for releasing heat generated from the LED light source 6a as a member for forming the hole section 10g, the number of parts can be reduced, and deformation of the resin frame 15 can also be controlled.

In this embodiment, as described above, the bezels 16 (i.e., bezels 16b, 16c and 16d) are arranged along predetermined sides (e.g., the arrow X1 side, the arrow Z1 side, and the arrow Z2 side, or a side portion) among four sides of the display area. The projected section 15a of the frame-shaped resin frame 15 and the hole section 10g to be engaged with the projected section 15a are provided in a side (e.g., the arrow X2 side) among four sides of the display area where the bezels 16 are not provided. In other words, the bezels 16 are arranged along the side portions of the liquid crystal display panel 2 that is other than the side portion of the liquid crystal display panel 2 where the projected sections 15a (e.g., the first engaging section) of the resin frame 15 and the hole sections 10b (e.g., the second engaging section) of the heat sink 10 are disposed. While deformation of the resin frame 15 is controlled by the bezels 16 (i.e., the bezels 16b, 16c and 16d) in the side where the bezels 16 are provided, the resin frame 15 is easily deformed in the side where the bezels 16 are not provided. According to this embodiment, the projected section 15a of the resin frame 15 and the hole section 10g to be engaged with the projected section 15a are provided in the side where the bezels 16 are not provided. Thus, deformation of the resin frame 15 can be controlled with respect to a portion that is easily deformed. Consequently, this is especially effective in a structure that has a side where no bezel is provided.

The embodiment described herein is in all respects merely examples, and shall not be construed as limiting the present invention. The scope of the present invention is defined by the claims and not by the above-described embodiments, and includes all equivalents to the claims and modifications within the intended scope thereof.

For example, the liquid crystal television apparatus 100 is described as an example of the "display device" and the "television apparatus". However, the present disclosure is not limited to this. For example, the present disclosure can also be applied to a display device such as a monitor of a personal computer other than a television apparatus, or to a television apparatus other than a liquid crystal television apparatus.

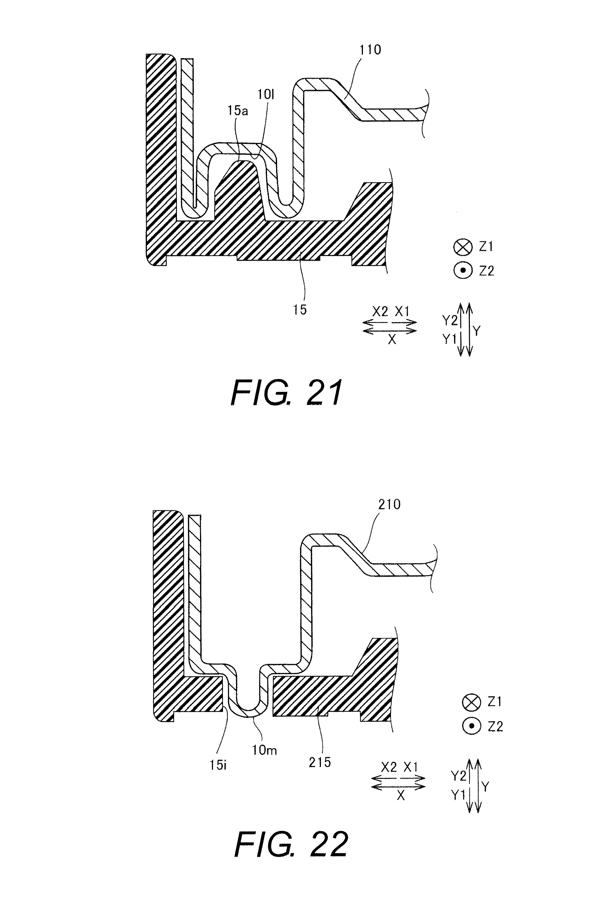

The present disclosure illustrates an example in which the hole section 10g is provided in the heat sink 10. However, the present disclosure is not limited to this. For example, as shown in FIG. 21, a recessed section 101 can be provided in a modified heat sink 110 instead of the hole section 10g such that the projected section 15a of the resin frame 15 can be inserted into the recessed section 101. The recessed section 101 is an example of a "second engaging section."

The present disclosure illustrates an example in which the hole section 10g is provided in the heat sink 10, and the projected section 15a is provided in the resin frame 15. However, the present disclosure is not limited to this. For example, as shown in FIG. 22, a projected section 10m can be provided in a modified heat sink 210, and a hole section 15i (or recessed section) can be provided in a modified resin frame 215. The hole section 15i and the projected section 10m are examples of a "first engaging section" and a "second engaging section," respectively.

The present disclosure illustrates an example in which two (i.e., a pair of) reinforcing portions 15c are provided with respect to one projected section 15a. However, the present disclosure is not limited to this. For example, one reinforcing portion or three reinforcing portions can be provided with respect to one projected section 15a. T

The present disclosure illustrates an example in which the bezels 16 are not provided in a side on the arrow X2 side where the heat sink 10 is provided. However, the present disclosure is not limited to this. For example, a modified bezel can be configured such that it is not provided in sides on the arrow X1 side, the arrow Z1 side, and the arrow Z2 side where the reflection sheet holders 9a, 9b and 9c are provided. In this case, a projected section (or a recessed section or a hole section) is provided in the resin frame that corresponds to the side where the bezel is not provided, while the recessed section or the hole section (or the projected section) is provided in the reflection sheet holder that corresponds to the side where the bezel is not provided.

The present disclosure illustrates an example in which the metal heat sink 10 made of sheet metal (SECC) is used. However, the present disclosure is not limited to this. For example, a heat sink made of a material such as aluminum or aluminum alloy having better heat-releasing properties than sheet metal (SECC) can be used as long as it is possible to release heat generated from the LED light source 6a or the heat generating element 81. In such a case, the thickness of the heat sink made of aluminum or aluminum alloy can be larger (for example, 1.0 mm) than the thickness (0.6 mm) of the metal heat sink 10 made of sheet metal (SECC). Consequently, heat generated from the heat generating element 81 can be released effectively.

With the present disclosure, the display device includes a rear metal member and a frame-shaped resin frame. The rear metal member is made of metal, and is provided on a rear surface side of a display panel and arranged along a side of the display panel. The frame-shaped resin frame is configured to cover a side surface of the rear metal member and arranged to overlap the side surface of the rear metal member in an anteroposterior direction. A first engaging section is formed in a portion of the frame-shaped resin frame facing the rear metal member in the anteroposterior direction. A second engaging section is formed in a portion of the rear metal member that corresponds to the first engaging section of the frame-shaped resin frame. The second engaging section is configured to be engaged with the first engaging section in the anteroposterior direction so as to restrict movement of the first engaging section in a direction perpendicular to the anteroposterior direction.

With this display device, the first engaging section is formed by a projected section, and the second engaging section is formed by a recessed section or a hole section. Furthermore, the first engaging section formed by the projected section is engaged with the second engaging section formed by the recessed section or the hole section. In one embodiment, the rear metal member is made of sheet metal, the first engaging section is formed by the projected section, and the second engaging section is formed by the hole section. Moreover, this display device includes a light source, while the rear metal member includes a heat sink for releasing heat generated from the light source. Furthermore, this display device includes a bezel provided in the frame-shaped resin frame on the opposite side of the rear metal member.

With the present disclosure, the television apparatus includes a receiver, a display panel, a rear metal member and a frame-shaped resin frame. The receiver is capable of receiving a television broadcast. The display panel displays the television broadcast received by the receiver. The rear metal member is made of metal that is provided on a rear surface side of the display panel and arranged along a side of the display panel. The frame-shaped resin frame is configured to cover a side surface of the rear metal member and arranged to overlap the side surface of the rear metal member in an anteroposterior direction. A first engaging section is formed in a portion of the frame-shaped resin frame facing the rear metal member in the anteroposterior direction. A second engaging section is formed in a portion of the rear metal member that corresponds to the first engaging section of the frame-shaped resin frame. The second engaging section is configured to be engaged with the first engaging section in the anteroposterior direction so as to restrict movement of the first engaging section in a direction perpendicular to the anteroposterior direction.

With this display device and the television apparatus, the resin frame can be prevented from being deformed.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts.

While only a preferred embodiment has been chosen to illustrate the present invention, it will be apparent to those skilled in the art from this disclosure that various changes and modifications can be made herein without departing from the scope of the invention as defined in the appended claims. Furthermore, the foregoing descriptions of the embodiment according to the present invention are provided for illustration only, and not for the purpose of limiting the invention as defined by the appended claims and their equivalents.

## Claims

1. A display device comprising:
a display panel;
a rear metal member disposed on a rear side of the display device relative to the display panel in a first direction of the display device, the rear metal member being arranged along a side portion of the display panel; and
a resin frame covering a side surface of the rear metal member such that the resin frame overlaps the side surface of the rear metal member in the first direction,
the resin frame having a first engaging section in a portion of the resin frame that faces the rear metal member in the first direction, and
the rear metal member having a second engaging section in a portion of the rear metal member that corresponds to the first engaging section of the resin frame, the second engaging section being engaged with the first engaging section in the first direction such that the second engaging section restricts movement of the first engaging section in a second direction of the display device, the second direction being perpendicular to the first direction.

2. The display device according to claim 1, wherein
the first engaging section includes a projected section, and
the second engaging section includes one of a recessed section and a hole section.

3. The display device according to claim 2, wherein
the second engaging section includes the hole section,
the rear metal member further includes a folded portion with a movement restricting surface, the folded portion partially defining the hole section of the second engaging section, the movement restricting surface abutting against the projected section of the first engaging section such that the movement restricting surface restricts movement of the projected section of the first engaging section in the second direction.

4. The display device according to claim 3, wherein
the folded portion is rearwardly folded such that a rear end portion of the folded portion of the rear metal member is positioned rearward with respect to a rear end portion of an abutting portion of the projected section that abuts against the movement restricting surface while the resin frame is arranged in front of the rear metal member.

5. The display device according to claim 3 or 4, wherein
the projected section of the resin frame includes a reinforcing portion that reinforces the projected section, the reinforcing portion being disposed on an opposite side of an abutting portion of the projected section that abuts against the movement restricting surface.

6. The display device according to claim 5, wherein
the reinforcing portion has a rib shape, the reinforcing portion extending in a direction perpendicular to a direction in which the abutting portion of the projected section extends.

7. The display device according to any of claims 2 through 6, wherein
the projected section of the resin frame has a rear distal end portion that is chamfered.

8. The display device according to any of claims 1 through 7, further comprising
a light source,
the rear metal member including a heat sink that is configured to release heat generated from the light source.

9. The display device according to any of claims 1 through 8, further comprising
a bezel disposed on a front side of the display device relative to the resin frame, the front side being an opposite side of the rear side,
the bezel being arranged along a side portion of the display panel that is other than the side portion of the display panel where the first engaging section of the resin frame and the second engaging section of the rear metal member are disposed.

10. A television apparatus comprising:
a receiver configured to receive a television broadcast;
a display panel configured to display the television broadcast received by the receiver;
a rear metal member disposed on a rear side of the television apparatus relative to the display panel in a first direction of the television apparatus, the rear metal member being arranged along a side portion of the display panel; and
a resin frame covering a side surface of the rear metal member such that the resin frame overlaps the side surface of the rear metal member in the first direction,
the resin frame having a first engaging section in a portion of the resin frame that faces the rear metal member in the first direction, and
the rear metal member having a second engaging section in a portion of the rear metal member that corresponds to the first engaging section of the resin frame, the second engaging section being engaged with the first engaging section in the first direction such that the second engaging section restricts movement of the first engaging section in a second direction of the television apparatus, the second direction being perpendicular to the first direction.
